# EUROPEAN PATENT APPLICATION

(11) **EP 2 750 050 A2**
(43) Date of publication of application: **02.07.2014**
(21) Application number: 13167478.0
(22) Date of filing: 13.05.2013
(51) Int. Cl.: G06F 17/30, G06Q 50/12

(54) **A hotel room availability search engine**

(30) Priority: 30.12.2012 US 201213731026
(71) Applicant: Travel Holdings Inc., Altamonte Springs, FL 32701 (US)
(72) Inventor: Palivatkel, Yossi, Ashdod (IL)
(74) Representative: Virdee-Crofts, Kulwinder Kaur

(57) **Abstract**

A search engine-based system to provide results substantially instantaneously on behalf of a user/customer or a searching enterprise, in response to entering search parameters. The system includes a database and an in memory synchronized database (IMSDB), wherein the search engine is enabled to serve the private user/customers or searching enterprise. The system also includes a notification system to maintain the IMSDB, wherein every change that occurs on the backend system either by a private user/customer, an employee of a searching enterprise or by one of its suppliers, is propagated to the search engine quickly and a presentation layer, wherein the system looks for changes in user/customer search parameters from those initially entered, and immediately performs a new search query, such that the user/customer or searching enterprise is presented with initial results or modified results substantially instantly, once a 'Search Now' button is clicked.

## Description

### FIELD OF THE INVENTION

The present invention generally relates to search engines, and more particularly to a synchronized engine that searches for hotel room availability, and is enabled to provide search results that appear substantially instantly.

### BACKGROUND OF THE INVENTION

Web search engines work by storing information about many web pages, which they retrieve from the HTML file itself. These pages are retrieved by a Web crawler or spider, an automated Web utility, which follows every link on a designated site. The contents of each page are then analyzed to determine how they should be indexed, for example, words can be extracted from the titles, page content, headings, or special fields called meta tags. Data about web pages are stored in an index database for use in later queries.

A query can be a single word. The purpose of an index is to allow information to be found as quickly as possible. Some search engines, such as Google, store all or part of the source page, referred to as a cache, as well as information about the web pages. When a user enters a query into a search engine, the engine examines its index and provides a listing of best-matching web pages according to its criteria, usually with a short summary containing the document's title and sometimes parts of the text. The index is built from the information stored with the data and the method by which the information is indexed. [*Wikipedia*, http://en.wikipedia.org/wiki/Web_search_engine, visited 30 December 2012]

Anyone searching for a hotel needs to specify where, when and how many people and/or rooms. Without answering these three user inputs it is impossible to determine what is available. So after the user types the date, destination, the number of rooms and presses the search button, the search is initiated. In other words, two steps are involved: 1. Performing the search; AND 2. Bringing the results to the user.

It would be advantageous to develop a system and methodology to provide search results enormously faster.

### SUMMARY OF THE INVENTION

A search engine-based system enabled to provide search results is disclosed. The results are displayed substantially instantaneously to a user (such as a customer or enterprise) in response to entering search parameters. The system includes a database to hold and store the data and/or an in memory synchronized database (IMSDB), wherein the search engine is enabled to serve users of the searching enterprise. The system also includes a notification system to maintain the IMSDB, wherein every change that occurs on the backend system either by a private user/customer, an employee of a searching enterprise or by its suppliers is propagated to the search engine in less than 5 seconds, and a presentation layer, wherein the system looks for every change in user/customer search parameters from those initially entered, and immediately performs a new search query, such that the user/customer is presented with initial results and modified results substantially instantly, once he clicks a 'Search Now' button.

The Search engine of the present invention is built on several layers.
1. A Database - to store data. In case of power outage the search engine can revert back to the latest state.
2. In memory synchronized database (IMSDB) is a search engine, serving millions of queries received daily, with an average response time of less than 20 milliseconds.
3. Notification System to maintain the IMSDB, every change that occurs on the backend system either by an employee or by the suppliers will be propagated to the search engine quickly.
4. Presentation layer, which looks for every change in user parameters from the originally entered user parameters, and immediately performs a new search query. The user is presented with instant results once he clicks the 'Search Now' button. This technology may be used for selling room nights, cruises, and travel vacations, as non-limiting examples.

A user searching for a hotel needs to specify where, when and how many people to be accommodated and/or rooms he wants. The engine running in the background is thin and efficient, but without answering these user inputs it is impossible to determine what is available. After the user/customer types the date and the destination, and even before he specifies the number of rooms and presses the search button, the search is initiated. So even before he presses the 'Search Now' button (or analogous button) the results are ready , but he doesn't see them (they do not show up on the screen) until he presses the 'Search Now' button and then the results appear immediately. The technology uses massive parallel processing and a predictive search. The development started by improving the search in traditional ways: minimizing data and eliminating calls to the server.

The search process involves two steps: 1. Performing the search; AND 2. Bringing the results to the user. The results are waiting within the user's computer and not at the server administering the search. This differs from auto-complete, where the user sees the results before he presses the 'Search Now' button. The system is divided into three levels: the database, the sync system and the In-Memory Synchronized DataBase (IMSDB). In-Memory DataBase (IMDB) is prior art. The invention provides synchronization of the IMDB.

A search into the system can be initiated by users typing in at a Website using their browsers or by systems connecting to a site by sending XML query requests, either by Internet Protocol (IP) or SOAP (simple object access protocol). SOAP is a protocol for exchanging information in a decentralized, distributed environment.

The user/customer browser communicates with the Web layer of the present invention and the Web layer communicates with the IMSDB, which is very scalable and very robust. It can extend over many servers. Everything is kept in memory and results can be sent in milliseconds. There are many fast test systems in existence, but their problem is their data is aged.

After a couple of hours the data loses relevance. The search system performs a mirroring. For example, if one of the enterprise users/customers, such as Hot Wire or Price Line books hotel rooms, a notification is created that Hot Wire or Price Line booked the rooms in the particular hotel and that the hotel is left with Y rooms available for sell.

Databases are not as scalable or as fast as application servers. So the present invention stores the updated information on the application server as well as the data base.

The IMSDB has static information, dynamic information, is scalable and performs testing. The database is maintained for backup in case the system should go down. The user interface is not as fast as the search itself. So if the user were to click 'Search Now,' and only then was the search initiated, it would take time to go to the Internet, to get the results and display them.

The stored information is URLs for Photo and Video. The present invention uses CDN service to serve media. One CDN is AKAMAI.

The IMSDB has two subsystems: the data notification subsystem and the server itself. The system can differentiate less relevant information from highly relevant information and forwards the highly relevant information first. Information is prioritized according to relevance and forwarded accordingly. Every server that needs the information is subscribed for the information on a need to know basis. The system knows exactly what information to send to each server. The information goes directly to the relevant subscriber. So the main idea is a smart, efficient rules based information system. Any query is sent to the Application Programming Interfaces ('API's). The APIs comprise the platform used by a program to access different services on the computer system.

According to a first aspect of the invention there is provided a search engine system enabled to provide search results, substantially instantaneously, to a user, the system comprising an in-memory synchronized database, a presentation layer operable to receive search parameters from a user, the presentation layer operable to detect a change in the entered search parameters and generate a search query, the system being operable to perform a search in response to the search query and transmit the search results to the presentation layer, wherein the presentation layer stores the search results, and wherein the presentation layer displays the search results in response to a user search command.

The presentation layer may be operable to transmit an initial search request when minimal search parameters are first entered by a user, and the system may be operable to perform an initial search on the in-memory synchronized database and transmit initial search results to the presentation layer.

The presentation layer is operable to display the initial search results and subsequent search results to the user in response to a user search command.

The presentation layer is operable to detect a change in an entered search parameter corresponding to a 'most modified' search parameter and transmit a search query.

The system may be operable to cancel a search if a subsequent search query is generated while the search is in progress.

The system may comprise a notification system to maintain the in-memory synchronized database, the notification system being operable to receive a change from a backend system and update the in-memory synchronized database accordingly.

The notification system may further comprise an application server comprising at least two sub-machines and a notification coordinator provided with at least one table to manage subscription and data routing on the machine level, wherein one sub-machine can hold multiple applications.

Every change on the at least one table may be recorded as an insertion, deletion or update, wherein when both deletion and update occur, the previous state and current state may be both recorded, and wherein the notification coordinator may check the recorded change and determines which sub-machines need to be notified, and sends the appropriate data to the sub-machines.

The system may further comprise a database to hold and store the data.

According to a second aspect of the invention there is provided a method of providing search results, substantially instantaneously, to a user, the method comprising; at a presentation layer, receiving search parameters from a user, detecting a change in the entered search parameters and generating a search query, performing a search on an in-memory synchronized database in response to the search query and transmitting the search results to the presentation layer, storing the search results, and displaying the search results in response to a user search command.

The method may comprise transmitting an initial search request when minimal search parameters are first entered by a user, performing an initial search on the in-memory synchronized database and transmitting initial search results to the presentation layer.

The method may comprise displaying the initial search results and subsequent search results to the user in response to a user search command.

The method may comprise detecting a change in an entered search parameter corresponding to a 'most modified' search parameter and transmitting a search query.

The method may comprise cancelling a search if a subsequent search query is generated while the search is in progress.

The method may comprise receiving a change from a backend system and updating the in-memory synchronized database accordingly.

There has thus been outlined, rather broadly, the more important features of the invention in order that the detailed description thereof that follows hereinafter may be better understood. Additional details and advantages of the invention will be set forth in the detailed description, and in part will be appreciated from the description, or may be learned by practice of the invention.

### BRIEF DESCRIPTION OF THE DRAWINGS

In order to understand the invention and to see how it may be carried out in practice, a preferred embodiment will now be described, by way of a non-limiting example only, with reference to the accompanying drawings, in the drawings:

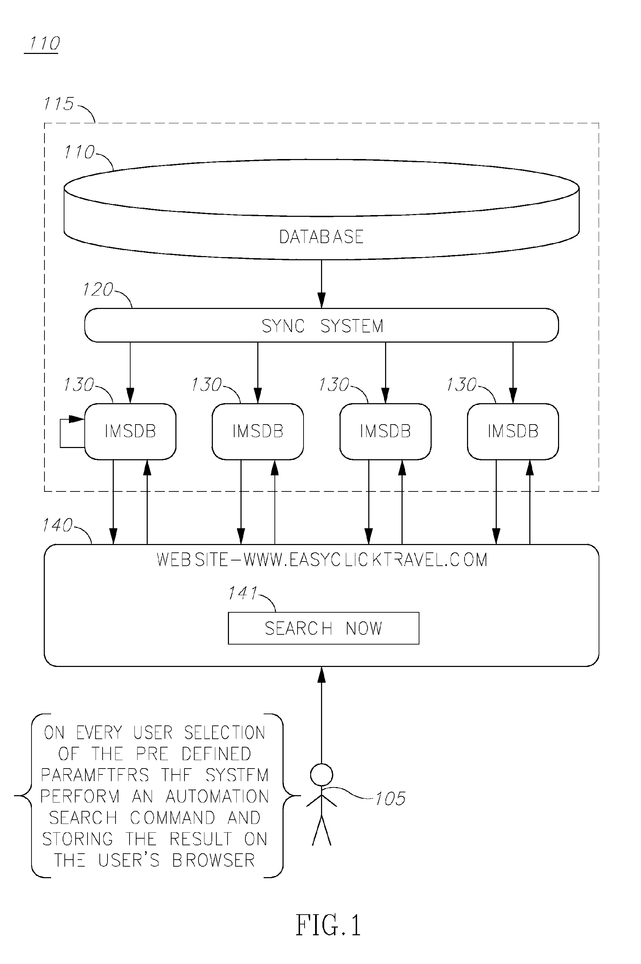

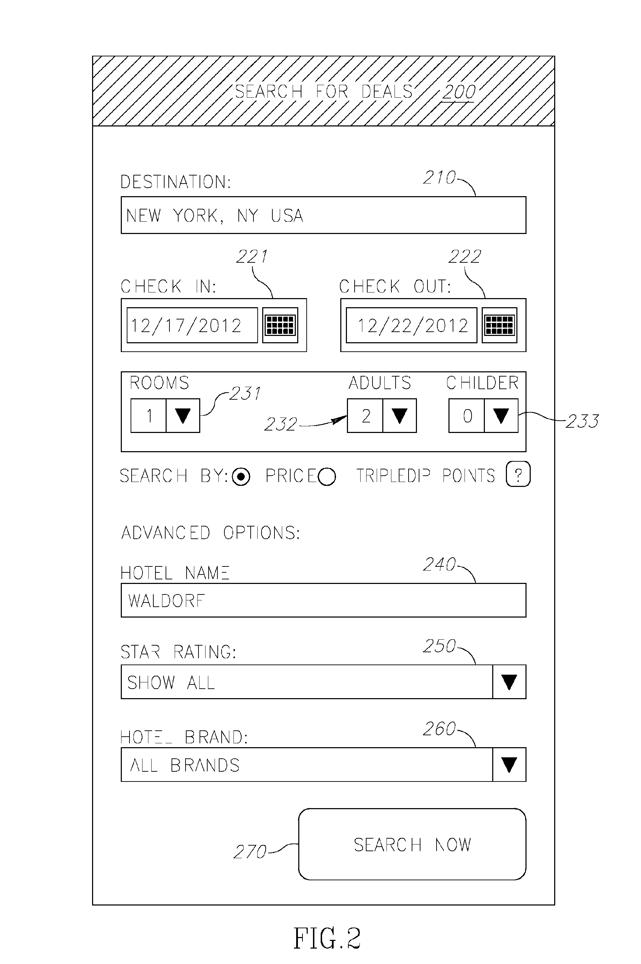

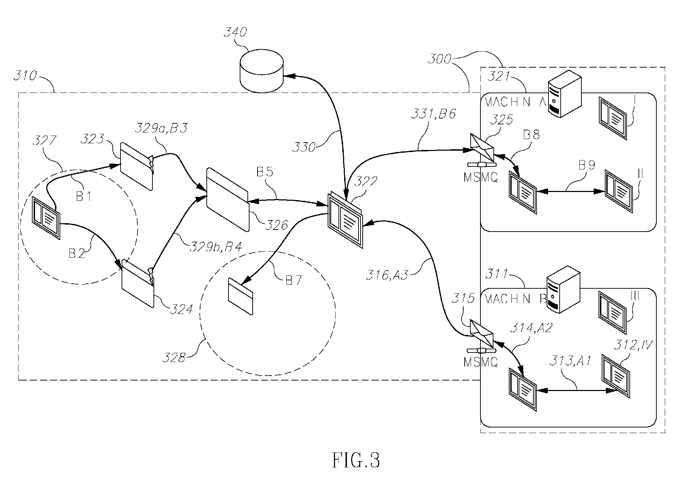

Fig. 1 is a high level system diagram, constructed according to the principles of the present invention;
Fig, 2 is a screen shot of the Presentation Layer, constructed according to the principles of the present invention; and
Fig, 3 is a flow diagram illustrating the Sync Cache Layer, including the notification system of Fig. 1, constructed according to the principles of the present invention.

All the above and other characteristics and advantages of the invention will be further understood through the following illustrative and non-limitative description of preferred embodiments thereof.

### DETAILED DESCRIPTION OF PREFERRED EMBODIMENTS

The principles and operation of a method and an apparatus according to the present invention may be better understood with reference to the drawings and the accompanying description, it being understood that these drawings are given for illustrative purposes only and are not meant to be limiting.

Fig. 1 is a high level system diagram, constructed according to the principles of the present invention. The Search engine of the present invention is built on several layers:
A Database 110 is provided to hold and store the data. In case of a power outage the search engine can revert back to the latest configuration.
The in-memory synchronized database (IMSDB) 130 is a search engine, capable of serving millions of queries received daily, with an average response time of less than 20 milliseconds. The IMSDB may have multiple modules.

A Notification System 120 maintains the IMSDB, providing notification for every change that occurs on the backend system either by an employee or by the suppliers. The notification is forwarded to the search engine in less than 5 seconds. Notification System 120 provides synchronization of IMSDB 130. Back end systems run a company by managing orders, inventory and supply processing. Back end systems operate automatically in the background by collecting input from users or other systems for processing.

The presentation layer 140 is an integral set of software modules, which looks for every change in user/customer 105 parameters from the originally entered user/customer parameters, and immediately performs a new search query even before the user gives the command perceived by him to start the search (for example, by selecting a button labeled "Search Now"). A search into the system can be initiated by a user/customer 105 typing in at the exemplary Website 115 of the embodiment on their browser or by other systems connecting into the system by sending XML query requests, either by Internet Protocol (IP) or SOAP. User/customer 105 is presented with instant results on presentation layer 140 once he clicks the 'Search Now' button 141.

Fig, 2 is a screen shot of the Presentation Layer, constructed according to the principles of the present invention. A user searching for hotel rooms 200 needs to specify where 210, when 221, 222 and how many people or rooms 231. Optionally, the number of children 233, aside from the number of adults 232 is entered.

After the user/customer types dates 221, 222 and destination 210, and even before he specifies number of rooms 231 and presses the 'Search Now' button 270, the search is initiated in the background. Even before he presses 'Search Now' button 270 the results are ready internally to be displayed for him. By performing some data analysis the algorithm learns what parameters are usually modified by users/customers. Whenever the user/customer makes a change to one of these parameters a 'search' command is triggered and the resultant data is stored on the user/customer's local machine but not immediately displayed. This enables the display of results to the user/customer instantly upon clicking 'Search Now' button 270.

User/customer entries trigger an automatic 'search' query as follows:
1. private user/customer or enterprise customer enters search parameters;
2. perform a search query;
3. the system pulls the search results and stores them on the user/customer's local browser;
4. If a parameter that is changed is one of the 'most modified' parameters, steps 2. and 3. are repeated on every such user/customer changed parameter and the previous operation is canceled, if still in progress, if not the search is repeated proportionately less frequently; and
5. after the 3 minimal parameters are first entered, whenever the customer clicks the 'Search Now' the stored results are displayed.

Fig, 3 is a flow diagram illustrating the Sync Cache Layer 300, including the notification system of Fig. 1, constructed according to the principles of the present invention. There are two flows: A and B, respectively in the diagram: A1..A3 and B1..B9.
A is the **subscription flow** 310
B is the **data notification flow (synchronization)** 320

Allegro is a combination of two main services: 1. Allegro Machine (AM), which is an application server that includes two sub-machines in an exemplary embodiment: Machine A 321 and Machine B 311; and 2. Allegro Network (AN) built around the Notification Coordinator 322, hereinafter referred to as AN 322. AM 311, 321 manages the subscription and data route on the machine level, such that one machine can hold multiple applications. AN 322 does the same for the entire network, for all AM's 311, 321, in this exemplary embodiment.

### The flows:

### A

Every application, e.g., Application IV of subscriber type Z 312, starts declaring itself 313 to Allegro Machine (AM) 311, 321; the declaration includes the exact database tables 323, 324 and exact columns on each table that the application wants to subscribe to, i.e., the subscription for changes A1 313. Allegro Network (AN) 322 receives this request and checks if exact request has already been made by another application on the same machine 314. If so nothing happens; if this is the first subscription for the type, AM forwards it 316 to AN 322 (A2)

AN 322 receives this subscription and store it on its local memory and configuration database storage 340, in order to survive a power outage (A3). Microsoft message queuing (MSMQ) processors 315, 325 are digital signature generators based on a hash of the following message properties:
correlation identifier;
application-specific information;
message body;
message label;
response queue; and
administration queue.

### B

Every change on a table 323, 324, 326 is recorded: Insertion, deletion 328 and update 327. When both deletion 328 and update 327 occur, the previous state and current state are both recorded 329a, 329b (B1-B4). AN 322 checks the recorded change 330 and determines which subscribers (machines) need to be notified, and sends the appropriate data to the subscribers 331.

For example Sub1 subscribed for Table T on columns C1 and C3; Sub2 subscribed for table T on columns C1 and C4; a change on column C1 will go to both Sub1 and Sub2, a change on column C3 will go only to Sub1, a change on column C4 will go only to Sub2, a change on column C2 will not be sent (B4-B6). AM 321 receives this change message 332 and does the same operation as AN 322 does between the applications on AN machine 321 (B7-B9)

Having described the present invention with regard to certain specific embodiments thereof, it is to be understood that the description is not meant as a limitation, since further modifications will now suggest themselves to those skilled in the art, and it is intended to cover such modifications as fall within the scope of the appended claims.

The invention may be understood with reference to the following numbered paragraphs;

## Claims

1. A search engine system enabled to provide search results, substantially instantaneously, to a user, the system comprising;
an in-memory synchronized database,
a presentation layer operable to receive search parameters from a user,
the presentation layer operable to detect a change in the entered search parameters and generate a search query,
the system being operable to perform a search on the in-memory synchronized database in response to the search query and transmit the search results to the presentation layer,
wherein the presentation layer stores the search results,
and wherein the presentation layer displays the search results in response to a user search command.

2. A system according to claim 1 wherein the presentation layer is operable to transmit an initial search request when minimal search parameters are first entered by a user, and the system is operable to perform an initial search on the in-memory synchronized database and transmit initial search results to the presentation layer.

3. A system according to claim 2 wherein the presentation layer is operable to display the initial search results and subsequent search results to the user in response to a user search command.

4. A system according to any one of the preceding claims wherein the presentation layer is operable to detect a change in an entered search parameter corresponding to a 'most modified' search parameter and transmit a search query.

5. A system according to any one of the preceding claims operable to cancel a search if a subsequent search query is generated while the search is in progress.

6. A system according to any one of the preceding claims comprising a notification system to maintain the in-memory synchronized database, the notification system being operable to receive a change from a backend system and update the in-memory synchronized database accordingly.

7. The system of claim 6, wherein the notification system further comprises an application server comprising at least two sub-machines and a notification coordinator provided with at least one table to manage subscription and data routing on the machine level, wherein one sub-machine can hold multiple applications.

8. The system of claim 7, wherein every change on the at least one table is recorded as an insertion, deletion or update, wherein when both deletion and update occur, the previous state and current state are both recorded, and wherein the notification coordinator checks the recorded change and determines which sub-machines need to be notified, and sends the appropriate data to the sub-machines.

9. The system of any one of the preceding claims further comprising a database to hold and store the data.

10. A method of providing search results, substantially instantaneously, to a user, the method comprising;
at a presentation layer, receiving search parameters from a user,
detecting a change in the entered search parameters and generating a search query, performing a search on an in-memory synchronized database in response to the search query and transmitting the search results to the presentation layer,
storing the search results,
and displaying the search results in response to a user search command.

11. A method according to claim 10 comprising transmitting an initial search request when minimal search parameters are first entered by a user, performing an initial search on the in-memory synchronized database and transmitting initial search results to the presentation layer.

12. A method according to claim 11 comprising displaying the initial search results and subsequent search results to the user in response to a user search command.

13. A method according to any one of claims 10 to 12 comprising detecting a change in an entered search parameter corresponding to a 'most modified' search parameter and transmitting a search query.

14. A method according to any one of claims 10 to 13 comprising cancelling a search if a subsequent search query is generated while the search is in progress.

15. A method according to any one of claims 10 to 14 comprising receiving a change from a backend system and updating the in-memory synchronized database accordingly.
